# EUROPEAN PATENT SPECIFICATION

(11) **EP 4 539 954 B1**
(45) Date of publication and mention of the grant of the patent: **12.08.2026**
(21) Application number: 23734213.4
(22) Date of filing: 20.06.2023
(51) Int. Cl.: B01D 29/05, B01D 46/00, B29C 45/14, A62B 23/02, B01D 46/10, B01D 46/58

(54) **METHOD OF MANUFACTURING A FILTER UNIT FOR AN AIR PURIFYING RESPIRATOR AND SUCH A FILTER UNIT**
VERFAHREN ZUR HERSTELLUNG EINER FILTEREINHEIT FÜR EIN LUFTREINIGENDES ATMUNGSGERÄT UND EINE SOLCHE FILTEREINHEIT
MÉTHODE DE FABRICATION D'UNE UNITÉ DE FILTRAGE POUR UN RESPIRATEUR À PURIFICATION D'AIR ET UNE TELLE UNITÉ DE FILTRAGE

(30) Priority: 20.06.2022 SE 2250752
(43) Date of publication of application: 23.04.2025
(73) Proprietor: TIKI Safety AB, 197 40 Bro (SE)
(72) Inventor: KLOCKSETH, Mikael, 167 43 Bromma (SE)
(74) Representative: Kransell & Wennborg KB
(86) International application number: PCT/EP2023/066603
(87) International publication number: WO 2023/247517

(56) References cited:
- WO-A1-2015/185736
- WO-A1-2019/123371
- CN-A- 104 512 000
- CN-A- 110 181 756
- JP-A- 2005 177 641
- US-A1- 2010 236 203

## Description

### TECHNICAL FIELD

The present disclosure relates generally to air purifying respirators and more specifically to a method of manufacturing a filter unit for such a air purifying respirator. A filter unit for an air purifying respirator is also disclosed.

### BACKGROUND

Air-purifying respirators are air filtering devices that protect against inhalation of both large and small particles by removing contaminants by filtration or absorption. They may be passive, APR, or powered, PAPR. The PAPRs have a great advantage over APRs, because they only require a simple fit test, and they do not increase the work of breathing. PAPRs also reduces the risk of leakage into the mask caused by growth of beard, wrinkles etc since they provide a positive pressure inside the face mask.

Air purifying respirators typically comprises a mask for covering the nose and mouth (half mask) or the entire face (full-face mask) of the wearer, a valve arrangement and a filter unit for purifying the inhalation air by filtering the air entering from the surrounding atmosphere into the mask.

The filter unit thus constitutes an important component of the air purifying respirator. Naturally the filter units should be capable of removing the dangerous or otherwise undesired particles from the inhalation air. Other desirable properties of the filter units are that they should be easily exchangeable, light and small in dimension not to impede the wearer, environmentally friendly and that they should allow quick manufacturing at low cost.

One type of previously known filter units comprises a comparatively thin sheet of a filtering media which has been pleated to form an accordion-like filter insert which is inserted into and sealingly attached to the interior walls of a filter housing having an air inlet and an air outlet. Another type of known filter units comprises a comparatively thicker felt-like filter material, one or several layers of which is inserted into a filter housing and sealingly attached to the inner walls.

US2010/0236203 A1 discloses a filter unit panel comprising a plurality of filter units and an outer frame that surrounds these units. Each of the plurality of filter units includes a pleated filter medium and a frame body that supports the filter medium.

JP 2005 177641 A discloses a method of manufacturing an air filter unit comprising placing an air filter medium in a metallic mould and moulding a supporting frame onto the periphery of the air filter medium.

CN 104512000 A discloses an automatic filter net generating device, comprising an automatic net feeding device, an injection moulding machine and a waste recycling device.

### SUMMARY

An object of the disclosure is to provide an enhanced method of manufacturing a filter unit for an air purifying respirator.

Another object is to provide such a method which allows manufacturing of the filter unit at high speed and low cost.

A further object is to provide such a method which allows for a modular manufacturing whereby the total filter area of the filter unit may easily be varied.

Still another object is to provide an such a method which allows simple recycling of the filter unit after use.

Yet another object is to provide an enhanced filter unit for an air purifying respirator.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

According to a first aspect, the present disclosure provides a method of manufacturing a filter unit for an air purifying respirator as defined in the appended claim 1. The method comprises the steps of;
- providing a sheet of filter material
- feeding a portion of the filter material to an open mould of an injection moulding machine, which mould comprises two mould halves exhibiting a mould cavity and a corresponding mould geometry for forming at least one filter panel, an inlet wall panel and one outlet wall panel,
- closing the mould to thereby cut out a filter wall from the sheet
- holding the at least one filter wall in said mould
- forming, in said mould, a filter panel frame around each of the at least one filter walls by injection moulding a polymer material onto the at least one filter wall to thereby form a filter panel, and
- simultaneously, by injection moulding said polymer material into said mould, forming an inlet wall panel and an outlet wall panel as an integral piece with the at least one filter panel, wherein pairs of panels are mutually interconnected by a respective bridging portion,
- opening the mould,
- retrieving the inlet wall panel, the outlet wall panel and the filter panel comprising the filter wall and the filter panel frame fixed to the filter wall and
- folding the panels, at the bridging portions in a zig-zag configuration, into a stack of panels with the at least one filter panel being arranged between the inlet wall panel and the outlet wall panel.

The method thus allows for that a filter panel which forms part of the filter unit may readily be produced at a single operation station in a combined filter material cutting and filter panel frame injection moulding operation. This reduces the need for intermediate handling and storage of the constituent components. The method also allows for high manufacturing speeds at low cost. The operation station preferably comprises a mould formed of at least two mould halves or members which are movable in relation to each other for opening and closing the mould. At least one of the mould halves or members comprises a cutting tool arranged to cut out the filter wall from the filter material sheet when the mould closes.

Additionally, the method also allows for a modular manufacturing process and a corresponding modular construction of the filter unit. This since the method allows for that any number of identical filter panels achieved by the method may be stacked together when forming the final filter unit. By this means, the total filter area of the filter unit may readily be adapted to various demands.

Further, the entire filter unit comprising an inlet wall panel, an outlet wall panel and any desired number of intermediate filter panels may readily be manufactured.

At some embodiments, the filter material and the injected polymer material comprise the same polymer material. This allows for that the filter frame is bonded to the filter wall by material fusion during the injection moulding. Additionally, this facilitates recycling of the filter panel since the entire panel may be recycled as a unit without the need of separating the filter wall from the filter panel frame.

Said same polymer material may be PP (Polypropylene) or PA (Polyamide).

Alternatively or in combination, the step of closing the mould to cut out a filter wall may comprise simultaneously cutting out a plurality of filter walls and the step of forming a filter panel may comprise simultaneously forming a number of filter panels, which number corresponds to the plurality of filter walls.

The inlet wall panel and the outlet wall panel may be produced by injection moulding of a suitable material. Preferably, the inlet wall panel and the outlet wall panel comprises the same material as the filter panel or filter panels of the filter unit. By this means recycling of the entire filter unit is facilitated. Additionally using the same material allows for that the panels are sealingly bonded together by material fusion for forming a sealed filter unit.

The method may comprise sealingly joining the peripheral edges of the filter panels, the inlet wall panel and the outlet wall panel. This allows for that the filter unit comprising the inlet panel, the outlet panel and the intermediate filter panel or panels may be connected directly to the air purifying respirator without the need of being received in or sealingly attached to any air tight housing or similar additional component for preventing surrounding air from being mixed with the filtered air flow in the filter unit.

Said peripheral edges may be sealingly joined by adhesion, heat fusion, ultrasonic welding, or by means of mechanical engagement means.

According to a second aspect, the disclosure provides a filter unit for an air purifying respirator as defined in appended claim 9. The filter unit comprises;
- an inlet wall panel having an air inlet opening
- an outlet wall panel having an air outlet opening and
- at least one filter panel, each filter panel having a filter frame, a filter wall and an air through passage, wherein
said panels are formed as one integral piece with pairs of panels being mutually interconnected by a respective bridging portion and folded, at the bridging portions, in a zig-zag configuration to form a sealed stack of panels in which the filter panels are arranged between the inlet wall panel and the outlet wall panel, which stack defines an interior air passage from the air inlet opening, through the filter walls and the air through passages to the outlet opening, which interior air passage is sealed from the outside of the stack.

At embodiments of the filter unit, said panels are planar.

Each panel may comprise a peripheral sealing portion which extends along the periphery of the panel and which is arranged to make sealing contact with a corresponding peripheral sealing portion of an adjacent panel.

Each filter panel may comprise an interior sealing portion which extends around the air through passage and is arranged to make sealing contact with a corresponding interior sealing portion of an adjacent filter panel.

Each filter panel may comprise a peripheral frame surrounding the filter wall.

The filter walls and the filter frames may comprise the same polymer material.

The filter panels, the inlet wall panel and the outlet wall panel may comprise the same polymer material.

Further objects and advantages of the method and the full-face mask appear from the following description of embodiments and from the appended claims.

### BRIEF DESCRIPTION OF THE DRAWINGS

Aspects and embodiments are now described, by way of example, with reference to the accompanying drawings, in which:
Fig. 1 is a section view schematically illustrating a step of an embodiment of the method of manufacturing a filter unit.
Figs. 2a and 2b are perspective views from different angles of a filter unit manufactured by an embodiment of the method.
Figs. 3a and 3b are exploded views in perspective from different angles of the filter unit shown in figs. 2a and 2b.

### DETAILED DESCRIPTION

The aspects of the present disclosure will now be described more fully hereinafter with reference to the accompanying drawings, in which certain embodiments of the invention are shown.

These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

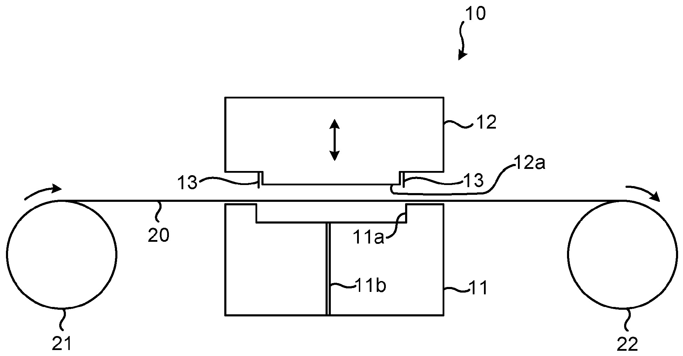

Fig. 1 illustrates schematically a manufacturing station and a step of the method of manufacturing according to an embodiment. The manufacturing station comprises an injection moulding machine 10, having a first mould half 11 and a second mould half 12 which is movable in and out of engagement with the first mould half 11. The first mould half 11 has a mould cavity 11a and the second mould half 12 has a corresponding geometry 12a for forming, together with the cavity 11a, a space defining the shape of the filter panel (not shown in fig 1) to be manufactured. In addition, the second mould half comprises a cutting tool 13. In the shown example the cutting tool 13 comprises a knife. The cutting tool may however comprise other means for cutting out or severing a filter wall from a sheet 20 of filter material. Such other means may comprise punching means, heat severing means and the like. The cutting tool may be arranged in either of the mould halves or may comprise two or more cooperating tools arranged in both tool halves. The cutting tool 13 has a shape which corresponds to the peripheral shape of the filter wall to be cut out.

A supply roll 21 of sheet-formed filter material is arranged to supply the sheet 20 of filter material between the first 11 and second 12 mould halves when the mould is open. The free end of the filter material sheet 20 is received on a collection roll 22. The supply roll and the collection roll 22 are arranged to keep the sheet stretched or tensioned during the cutting operation. The filter material may comprise various different materials having filtering properties. At the shown example the sheet comprises nonwoven fibres of PP. However, other examples of suitable filter materials comprise PTFE (Polytetrafluoroethylene) and PA (Polyamide).

At the shown exemplifying embodiment of the method of manufacturing a filter unit, the sheet 20 of filter material is fed between the first 11 and second 12 mould halves when the mould is open. Thereafter, the mould is closed whereby the cutting tool 13 cuts out a portion of the filter material. The cut-out portion of the filter material is held in place in the mould cavity 11a by a clamping action exerted by the cooperating first 11 and second 12 mould halves. Alternatively or in combination, the mould may be provided with separate clamping means (not shown) for holding the cut-out portion of the filter material in the mould cavity 11b. While keeping the mould closed and holding the cut-out portion of the filter material in the mould cavity 11a, a polymer material is injected into the mould cavity 11a through a channel 11b arranged in the first mould half 11. The injected polymer material may be selected from a wide range of thermoformable polymers. Preferably, the injected material should be fusible with the filter material such that the injected material is securely fixed to the filter material when forming the filter panel. The injected material may e.g. comprise the same polymer material as the filter material. In the shown example both the filter material and the injected material comprises PP. At a non-shown alternative both the filter material and the injected material comprises PA.

The mould cavity 11a is formed such that the injected material, when hardened, forms a rigid frame around the cut-out portion of the filter material, which frame is fixed to the filter material. When the injected material has hardened, the mould is opened and the filter panel comprising the filter wall and the filter frame fixed thereto is removed from the mould cavity 11a.

At a not shown alternative, the first mould half comprises a plurality of mould cavities and the second mould half a corresponding number of corresponding geometries as well as a corresponding number of cutting tools. At such embodiments, the filter material sheet is fed in between the mould halves such that it overlaps all mould cavities. Such embodiments allow for that several filter panels are produced at each injection cycle of the injection moulding machine.

For completing the filter unit, an inlet wall panel and an outlet wall panel may be produced by injection moulding in a separate injection moulding machine. Alternatively, the inlet and/or the outlet wall panels may be injection moulded simultaneously with the filter panel or filter panels in the same injection moulding machine. Since the inlet and outlet wall panels normally does not comprise any filter material, the mould cavities for forming these panels need not to be covered by filter material when the mould is closed.

At a further not shown alternative, the mould halves may comprise a mould cavity and a corresponding mould geometry for forming one or several filter panels, an inlet wall panel and an outlet wall panel which panels are formed as one integral piece with pairs of panels being mutually interconnected by a respective bridging portion. The bridging portion may act as a hinge such that the panels may be folded in a zig-zag configuration to form a stack of panels with one or several filter panels being arranged between the inlet wall panel and the outlet wall panel.

After having provided the filter panels, the inlet wall panel and the outlet wall panel in either way described above, the panels are stacked one on top of the other with the filter panel or panels being arranged between the inlet wall panel and the outlet wall panel. Thereafter, the peripheral edges of the panels are sealingly joined together such that the interior of the filter unit comprising the stack of panels is sealed-off from the surrounding atmosphere. This may be accomplished by means of mechanical engagement means which clamp the stacked panels mutually into sealing contact. Alternatively or in combination, the edges of the panels may be mutually joined by adhesion, heat fusion and/or ultrasonic welding.

By this means, a filter unit is readily manufactured in a fast and cost-efficient manner. The resulting filter unit may be directly attached to the mask of an air purifying respirator without the need of any additional filter housing.

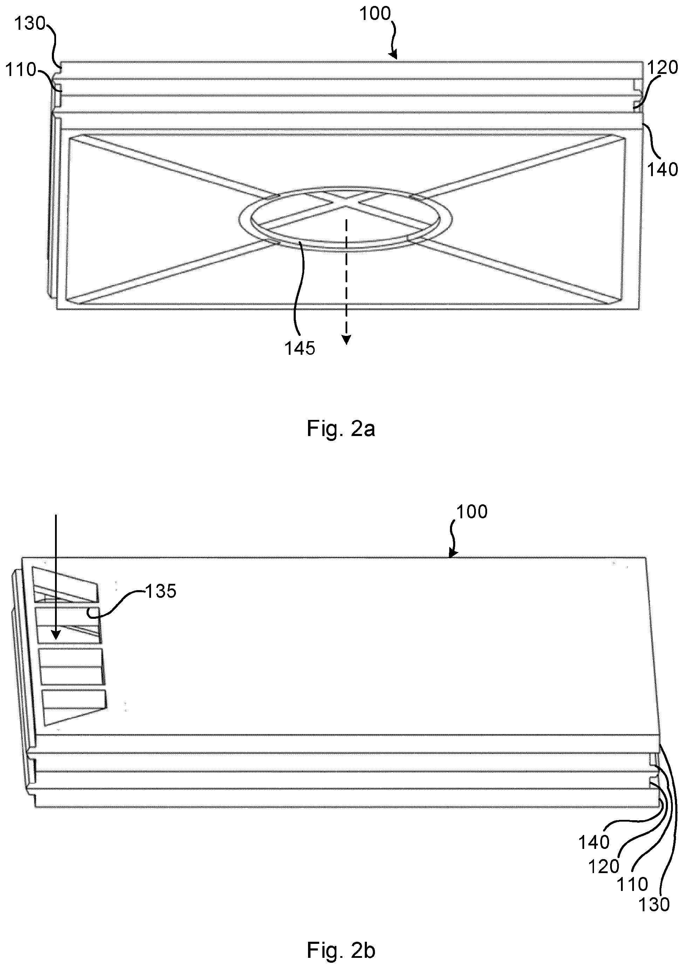

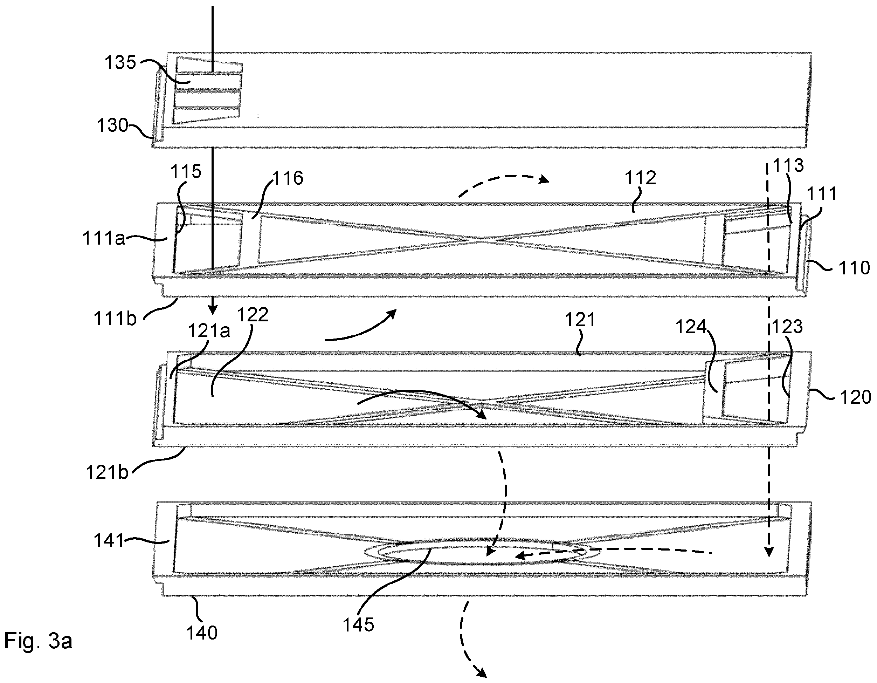

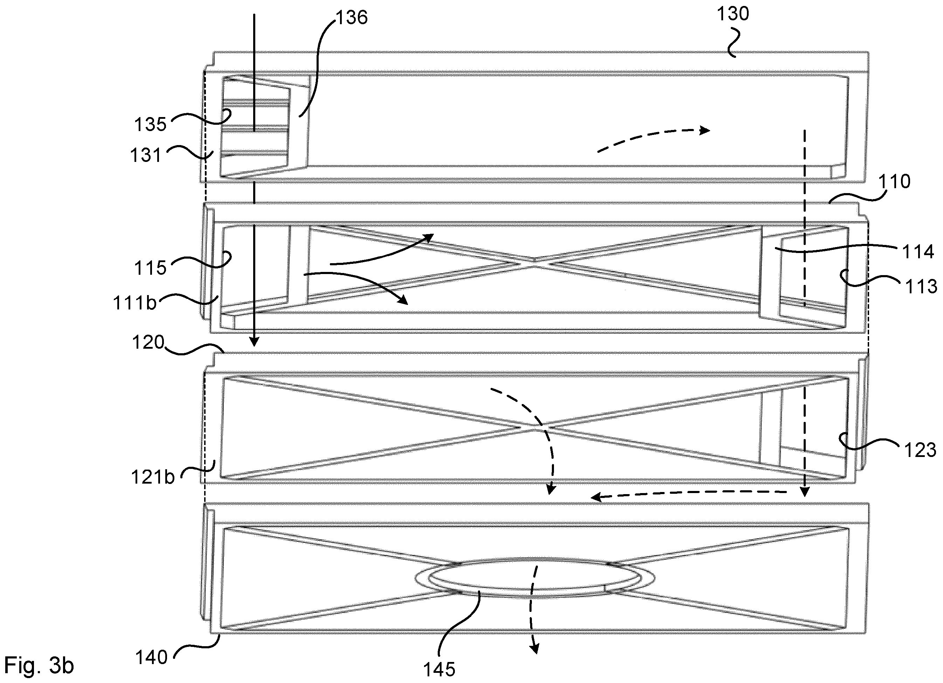

Figs 2a and 2b show an exemplifying filter unit 100 when assembled in respective perspective views. Figs 3a and 3b show the filter unit 100 in respective perspective exploded views.

The filter unit 100 comprises a first filter panel 110, a second filter panel 120, an inlet wall panel 130 and an outlet wall panel 140 which are stacked together with the filter panels 110, 120 arranged between the inlet wall panel 130 and the outlet wall panel 140.

Both filter panels 110, 120 are manufactured as described above and comprises a filter panel frame 111, 121 and a filter wall 112, 122 which filter wall is made of an air permeable filter material, and is surrounded by the filter frame 111, 121. Each filter frame 111, 121 exhibits two peripheral sealing portions 111a, 111b, 121a, 121b facing in opposite directions.

The inlet wall panel 130 and the outlet wall panel are generally impermeable for air except at an inlet opening 135 and an outlet opening 145 respectively. Each of the inlet wall panel 130 and the outlet wall panel 140 comprises a peripheral sealing portion 131, 141 which faces the adjacent filter panel 110, 120).

When stacked, the peripheral sealing portion 131 of the inlet wall panel sealingly contacts the upper peripheral sealing portion 111a of the first filter panel 110. Correspondingly the lower peripheral sealing portion 111b of the first filter panel 110 sealingly contacts the upper peripheral sealing portion 121a of the second filter panel 120 and the lower peripheral sealing portion 121b of the second filter panel sealingly contacts the peripheral sealing portion 141 of the outlet wall panel 140. By this means the interior of the filter unit 100 is sealed from the surrounding atmosphere except at the inlet opening 135 and the outlet opening 145.

Both filter panels 110, 120 further exhibit a first air through passage 113, 123 surrounded by mutually cooperating first sealing rims 114, 124. The first filter panel 110 being arranged adjacent the inlet wall panel 130 further exhibits a second air through passage 115 which is aligned with inlet opening 135 arranged in the inlet wall panel 130. The second 115 air through opening and the inlet opening 135 are surrounded by respective and mutually cooperating second sealing rims 116, 136.

In figs 2a-3b the flow of unfiltered air is represented by solid arrows and the flow of filtered air is represented by dashed arrows. When the filter panels, 110, 120, the inlet wall panel 130 and the outlet wall panel 140 have been stacked and sealed as described above, air from the surrounding passes into the filter unit 100 through the inlet opening 135 in the inlet wall panel and continues through the second through opening 115 in the first filter panel 110. The unfiltered inlet air flow is prevented from entering the space between the inlet wall panel 130 and the first filter panel 110 by the cooperating sealing rims 116, 136. After having passed the second through opening 115 in the first filter panel 110, the unfiltered flow is divided into a first flow which passes through the filter wall 112 of the first filter panel and a second flow through the filter wall 122 of the second filter panel 120. The unfiltered air flow is prevented from entering the first air through passages 113. 123 by the cooperating first sealing rims 114, 124.

The air flow passing through the filter wall 112 of the first filter panel is filtered at this passage through the filter wall 112 and enters the space between the first filter panel 110 and the inlet wall panel 130. From this space the filtered air passes through the first air through passages 113, 123 and enters the space between the second filter panel 120 and the outlet wall panel 140.

The second flow is filtered when passing the filter wall 122 of the second filter panel and joins the first, now filtered, air flow in the space between the second wall panel 120 and the outlet wall panel 140. From this space the filtered air passes out through the outlet opening 145 in the outlet wall panel 140.

Hence the filter unit 100 forms a complete filter unit which is sealed from the surrounding except at the inlet 135 and the outlet 145. By this means the outlet opening 145 of the filter unit 100 may be directly connected to an inlet opening in the mask (not shown) of an air purifying respirator, without the need for any additional filter housing or other sealing means.

An important advantage of the manufacturing method and the filter unit is that the construction of filter unit 100 is modular and may easily be adapted to different applications by selecting the number of filter panels comprised in the stack. Thereby the total area of the filtering material included in the filter unit and exposed to the unfiltered air may easily be adapted by selecting any desirable number of filter panels forming part of the stack.

The aspects of the present disclosure have mainly been described above with reference to a few embodiments and examples thereof. However, as is readily appreciated by a person skilled in the art, other embodiments than the ones disclosed above are equally possible within the scope of the invention, as defined by the appended patent claims.

## Claims

1. Method of manufacturing a filter unit (100) for an air purifying respirator, which method comprises the steps of;
- providing a sheet (20) of filter material
- feeding a portion of the filter material to an open mould (11, 12) of an injection moulding machine, which mould comprises two mould halves exhibiting a mould cavity and a corresponding mould geometry for forming at least one filter panel, an inlet wall panel and an outlet wall panel,
- closing the mould (11, 12) to thereby cut out at least one filter wall (112, 122) from the sheet (20)
- holding the at least one filter wall in said mould (11, 12)
- forming, in said mould, a filter panel frame (111, 121) around each of the at least one filter walls (112, 122) by injection moulding a polymer material onto the at least one filter wall (112, 122) to thereby form a filter panel, and
- simultaneously, by injection moulding said polymer material into said mould, forming an inlet wall panel and an outlet wall panel as an integral piece with the at least one filter panel, wherein pairs of panels are mutually interconnected by a respective bridging portion,
- opening the mould (11, 12),
- retrieving the inlet wall panel, the outlet wall panel and the filter panel (110, 120) comprising the filter wall (112, 122) and the filter panel frame (111, 121) fixed to the filter wall, and
- folding the panels, at the bridging portions in a zig-zag configuration, into a stack of panels with the at least one filter panel being arranged between the inlet wall panel and the outlet wall panel.

2. Method according to claim 1, wherein the filter material and the injected polymer material comprises the same polymer material.

3. Method according to claim 2, wherein said same polymer material is PP or PA.

4. Method according to any of claims 1-3, wherein the step of closing the mould to cut out a filter wall comprises simultaneously cutting out a plurality of filter walls and wherein the step of forming a filter panel comprises simultaneously forming a number of filter panels, which number corresponds to the plurality of filter walls.

5. Method according to any of claims 1-4, comprising sealingly joining the peripheral edges of the filter panels (110, 120), the inlet wall panel (130) and the outlet wall panel (140).

6. Method according to claim 5, wherein said peripheral edges are sealingly joined by adhesion, heat fusion, ultrasonic welding, or by means of mechanical engagement means.

7. A filter unit (100) for an air purifying respirator manufactured by any of the methods of claims 1-6, which filter unit comprises;
- an inlet wall panel (130) having an air inlet opening (135),
- an outlet wall panel (140) having an air outlet opening (145), and
- at least one filter panel (110, 120), each filter panel having a filter frame, a filter wall (112, 122) and an air through passage (113, 123), wherein
said panels (110, 120, 130, 140) are formed as one integral piece with pairs of panels being mutually interconnected by a respective bridging portion and folded, at the bridging portions, in a zig-zag configuration to form a sealed stack of panels in which the at least one filter panel (110, 120) is arranged between the inlet wall panel (130) and the outlet wall panel (140), which stack defines an interior air passage from the air inlet opening (135), through the filter walls (112, 122) and the air through passages (113, 123) to the outlet opening (145), which interior air passage is sealed from the outside of the stack.

8. A filter unit according to claim 7, wherein said panels (110, 120, 130, 140) are planar.

9. A filter unit according to claim 7 or 8, wherein each panel (110, 120, 130, 140) comprises a peripheral sealing portion (111a, 111b, 121a, 121b, 131, 141) which extends along the periphery of the panel (110, 120, 130, 140) and which is arranged to make sealing contact with a corresponding peripheral sealing portion (111a, 111b, 121a, 121b, 131, 141) of an adjacent panel (110, 120, 130, 140).

10. A filter unit according to any of claims 7-9, wherein each filter panel (110, 120) comprises an interior sealing portion (114, 124) which extends around the air through passage (113, 123) and is arranged to make sealing contact with a corresponding interior sealing portion (114, 124) of an adjacent filter panel (110, 120).

11. A filter unit according to any of claims 7-10, wherein each filter panel (110, 120) comprises a peripheral frame (111, 121) surrounding the filter wall (112, 122).

12. A filter unit according to any of claims 7-11, wherein the filter walls (112, 122) ant the filter frames (111, 121) comprise the same polymer material.

13. A filter unit according to any of claims 7-12, wherein the filter panels (110, 120), the inlet wall panel (130) and the outlet wall panel (140) comprise the same polymer material.

## Patentansprüche

1. Verfahren zur Herstellung einer Filtereinheit (100) für ein luftreinigendes Atmungsgerät, wobei das Verfahren die folgenden Schritte umfasst:
- Vorsehen einer Lage (20) von Filtermaterial,
- Zuführen eines Teils des Filtermaterials in eine offene Gießform (11, 12) einer Spritzgießmaschine, wobei die Gießform zwei Gießformhälften mit einem Gießformnest und einer entsprechenden Gießformgeometrie zum Bilden mindestens einer Filterplatte, einer Einlasswandplatte und einer Auslasswandplatte aufweist,
- Schließen der Gießform (11, 12), um dadurch mindestens eine Filterwand (112, 122) aus der Lage (20) auszuschneiden,
- Halten der mindestens einen Filterwand in der Gießform (11, 12),
- Bilden eines Filterplattenrahmens (111, 121) um jede der mindestens einen Filterwand (112, 122) in der Gießform durch Aufspritzen eines Polymermaterials auf die mindestens eine Filterwand (112, 122) und dadurch Bilden einer Filterplatte, und
- durch Spritzgießen des Polymermaterials in die Gießform gleichzeitiges Bilden einer Einlasswandplatte und einer Auslasswandplatte einstückig mit der mindestens einen Filterplatte, wobei Paare der Platten miteinander durch ein jeweiliges Überbrückungsteil verbunden werden,
- Öffnen der Gießform (11, 12),
- Entnehmen der Einlasswandplatte, der Auslasswandplatte und der Filterplatte (110, 120) mit der Filterwand (112, 122) und dem an der Filterwand befestigten Filterplattenrahmen (111, 121), und
- Falten der Platten an den Überbrückungsteilen in einer Zickzack-Konfiguration zu einem Stapel von Platten, wobei die mindestens eine Filterplatte zwischen der Einlasswandplatte und der Auslasswandplatte angeordnet ist.

2. Verfahren nach Anspruch 1, wobei das Filtermaterial und das eingespritzte Polymermaterial aus dem gleichen Polymermaterial bestehen.

3. Verfahren nach Anspruch 2, wobei das gleiche Polymermaterial PP oder PA ist.

4. Verfahren nach einem der Ansprüche 1 bis 3, wobei der Schritt des Schließens der Gießform, um eine Filterwand auszuschneiden, das gleichzeitige Ausschneiden mehrerer Filterwände umfasst, und wobei der Schritt des Bildens einer Filterplatte das gleichzeitige Bilden einer Anzahl von Filterplatten umfasst, wobei die Anzahl den mehreren Filterwänden entspricht.

5. Verfahren nach einem der Ansprüche 1 bis 4, umfassend das abdichtende Verbinden der Umlaufskanten der Filterplatten (110, 120), der Einlasswandplatte (130) und der Auslasswandplatte (140).

6. Verfahren nach Anspruch 5, wobei die Umlaufskanten durch Adhäsion, Wärmeschweißen, Ultraschallschweißen oder mittels mechanischer Verbindungsmittel abdichtend verbunden werden.

7. Filtereinheit (100) für ein nach einem der Verfahren nach den Ansprüchen 1 bis 6 hergestelltes luftreinigendes Atmungsgerät, wobei die Filtereinheit Folgendes aufweist:
- eine Einlasswandplatte (130) mit einer Lufteinlassöffnung (135),
- eine Auslasswandplatte (140) mit einer Luftauslassöffnung (145), und
- mindestens eine Filterplatte (110, 120), wobei jede Filterplatte einen Filterrahmen, eine Filterwand (112, 122) und einen Luftdurchgang (113, 123) aufweist,
wobei die Platten (110, 120, 130, 140) durch ein jeweiliges Überbrückungsteil einstückig mit Paaren der Platten gebildet und an den Überbrückungsteilen in einer Zickzack-Konfiguration gefaltet sind, um einen abgedichteten Stapel von Platten zu bilden, bei dem die mindestens eine Filterplatte (110, 120) zwischen der Einlasswandplatte (130) und der Auslasswandplatte (140) angeordnet ist, wobei der Stapel einen inneren Luftdurchgang von der Lufteinlassöffnung (135) durch die Filterwände (112, 122) und die Luftdurchgänge (113, 123) zu der Auslassöffnung (145) definiert, wobei der innere Luftdurchgang gegen das Äußere des Stapels abgedichtet ist.

8. Filtereinheit nach Anspruch 7, wobei die Platten (110, 120, 130, 140) planar sind.

9. Filtereinheit nach Anspruch 7 oder 8, wobei jede Platte (110, 120, 130, 140) einen umlaufenden Abdichtteil (111a, 111b, 121a, 121b, 131, 141) aufweist, der sich entlang des Umfangs der Platte (110, 120, 130, 140) erstreckt und der derart angeordnet ist, dass ein abdichtender Kontakt mit einem entsprechenden umlaufenden Abdichtteil (111a, 111b, 121a, 121b, 131, 141) einer benachbarten Platte (110, 120, 130, 140) hergestellt wird.

10. Filtereinheit nach einem der Ansprüche 7 bis 9, wobei jede Filterplatte (110, 120) einen inneren Abdichtteil (114, 124) aufweist, der sich um den Luftdurchgang (113, 123) erstreckt und derart angeordnet ist, dass ein abdichtender Kontakt mit einem entsprechenden inneren Abdichtteil (114, 124) einer benachbarten Filterplatte (110, 120) hergestellt wird.

11. Filtereinheit nach einem der Ansprüche 7 bis 10, wobei jede Filterplatte (110, 120) einen umlaufenden Rahmen (111, 121) um die Filterwand (112, 122) aufweist.

12. Filtereinheit nach einem der Ansprüche 7 bis 11, wobei die Filterwände (112, 122) und die Filterrahmen (111, 121) aus dem gleichen Polymermaterial bestehen.

13. Filtereinheit nach einem der Ansprüche 7 bis 12, wobei die Filterplatten (110, 120), die Einlasswandplatte (130) und die Auslasswandplatte (140) aus dem gleichen Polymermaterial bestehen.

## Revendications

1. Procédé de fabrication d'une unité de filtrage (100) pour un respirateur à purification d'air, lequel procédé comprend les étapes de :
- fournir un film (20) de matériau de filtrage,
- alimenter une partie du matériau de filtrage vers un moule ouvert (11, 12) d'une machine de moulage par injection, lequel moule comprend deux moitiés de moule ayant une cavité de moule et une géométrie de moule correspondante pour former au moins un panneau de filtrage, un panneau de paroi d'entrée et un panneau de paroi de sortie,
- fermer le moule (11, 12) pour découper ainsi au moins une paroi de filtrage (112, 122) du film (20),
- maintenir l'au moins une paroi de filtrage dans ledit moule (11, 12),
- former, dans ledit moule, un cadre de panneau de filtrage (111, 121) autour de chacune des au moins une paroi de filtrage (112, 122) en moulant par injection un matériau polymère sur l'au moins une paroi de filtrage (112, 122) pour former ainsi un panneau de filtrage, et
- simultanément, en moulant par injection ledit matériau polymère dans ledit moule, former un panneau de paroi d'entrée et un panneau de paroi de sortie en tant que pièce intégrale avec l'au moins un panneau de filtrage, dans lequel des paires de panneaux sont mutuellement interconnectées par une partie respective formant un pont,
- ouvrir le moule (11, 12) ;
- récupérer le panneau de paroi d'entrée, le panneau de paroi de sortie et le panneau de filtrage (110, 120) comprenant la paroi de filtrage (112, 122) et le cadre de panneau de filtrage (111, 121) fixé sur la paroi de filtrage, et
- plier les panneaux, sur les parties formant un pont en configuration en zig-zag, en une pile de panneaux avec l'au moins un panneau de filtrage agencé entre le panneau de paroi d'entrée et le panneau de paroi de sortie.

2. Procédé selon la revendication 1, dans lequel le matériau de filtrage et le matériau polymère injecté comprennent le même matériau polymère.

3. Procédé selon la revendication 2, dans lequel le même matériau polymère est du PP ou du PA.

4. Procédé selon l'une quelconque des revendications 1-3, dans lequel l'étape de fermer le moule pour découper une paroi de filtrage comprend de découper simultanément une pluralité de parois de filtrage et dans lequel l'étape de former un panneau de filtrage comprend simultanément de former un nombre de panneaux de filtrage, lequel nombre correspond à la pluralité de parois de filtrage.

5. Procédé selon l'une quelconque des revendications 1-4, comprenant d'assembler de manière étanche les bords périphériques des panneaux de filtrage (110, 120), du panneau de paroi d'entrée (130) et du panneau de paroi de sortie (140).

6. Procédé selon la revendication 5, dans lequel lesdits bords périphériques sont assemblés de manière étanche par adhésion, thermo-fusion, soudage aux ultrasons ou par un moyen d'engagement mécanique.

7. Unité de filtrage (100) pour un respirateur à purification d'air fabriqué selon l'un des procédés selon l'une des revendications 1 - 6,
laquelle unité de filtrage comprend :
- un panneau de paroi d'entrée (130) ayant une ouverture d'entrée d'air (135),
- un panneau de paroi de sortie (140) ayant une ouverture de sortie d'air (145), et
- au moins un panneau de filtrage (110, 120), chaque panneau de filtrage ayant un cadre de filtrage, une paroi de filtrage (112, 122) et un passage traversant pour l'air (113, 123), dans lequel
lesdits panneaux (110, 120, 130, 140) sont formés en tant qu'une pièce intégrale avec des paires de panneaux mutuellement interconnectés par une partie respective formant un pont et pliés sur les parties faisant un pont, dans une configuration en zig-zag pour former une pile étanche de panneaux dans laquelle l'au moins un panneau de filtrage (110, 120) est agencé entre le panneau de paroi d'entrée (130) et le panneau de paroi de sortie (140), laquelle pile définit un passage d'air intérieur de l'ouverture d'entrée d'air (135), à travers les parois de filtrage (112, 122) et les passages traversants pour l'air (113, 123) vers l'ouverture de sortie (145), lequel passage d'air intérieur est étanchéifié de l'extérieur de la pile.

8. Unité de filtrage selon la revendication 7, dans laquelle lesdits panneaux (110, 120, 130, 140) sont planaires.

9. Unité de filtrage selon la revendication 7 ou 8, dans laquelle chaque panneau (110, 120, 130, 140) comprend une partie d'étanchéité périphérique (111a, 111b, 121a, 121b, 131, 141) qui s'étend le long de la périphérie du panneau (110, 120, 130, 140) et qui est agencée pour réaliser un contact d'étanchéité avec une partie d'étanchéité périphérique correspondante (111a, 111b, 121a, 121b, 131, 141) d'un panneau adjacent (110, 120, 130, 140).

10. Unité de filtrage selon l'une quelconque des revendications 7-9, dans laquelle chaque panneau de filtrage (110, 120) comprend une partie d'étanchéité intérieure (114, 124) qui s'étend autour du passage traversant pour l'air (113, 123) et est agencée pour créer un contact d'étanchéité avec une partie d'étanchéité intérieure correspondante (114, 124) d'un panneau de filtrage adjacent (110, 120).

11. Unité de filtrage selon l'une quelconque des revendications 7-10, dans laquelle chaque panneau de filtrage (110, 120) comprend un cadre périphérique (111, 121) entourant la paroi de filtrage (112, 122).

12. Unité de filtrage selon l'une quelconque des revendications 7-11, dans laquelle les parois de filtrage (112, 122) et les cadres de filtrage (111, 121) comprennent le même matériau polymère.

13. Unité de filtrage selon l'une quelconque des revendications 7-12, dans laquelle les panneaux de filtrage (110, 120), le panneau de paroi d'entrée (130) et le panneau de paroi de sortie (140) comprennent le même matériau polymère.
